Europäisches Patentamt

European Patent Office

Office européen des brevets

(19)

(11) EP 0 959 096 A1

(12) EUROPEAN PATENT APPLICATION

(43) Date of publication:
24.11.1999 Bulletin 1999/47

(51) Int Cl.⁶: **C08G 81/02**, C08F 297/04

(21) Application number: 99303940.3

(22) Date of filing: 20.05.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 21.05.1998 JP 10419198
13.05.1999 JP 13327199

(71) Applicant: **Bridgestone Corporation Tokyo (JP)**

(72) Inventor: **Omura, Tetsuya Kodaira City, Tokyo (JP)**

(74) Representative: **Whalley, Kevin MARKS & CLERK, 57-60 Lincoln's Inn Fields London WC2A 3LS (GB)**

(54) **Method of producing block copolymers**

(57) A block copolymer is produced by polymerizing conjugated diene monomer with particular initiator and then reacting with a terminal-modified isobutylene based polymer.

## Description

This invention relates to a method of producing a block copolymer and more particularly to a method of producing a block copolymer by modifying an active terminal of a polymer obtained through anionic polymerization with a modified isobutylene derived polymer.

As a method of giving various properties to a polymer, there is a method wherein two or more monomers are polymerized individually to form a block copolymer. As a method of producing the block copolymer, a living polymerization process is useful. In the living polymerization process, however, there may be caused a case that the polymerization does not progress in accordance with a combination of an initiator and a monomer, so that it is well-known to take a care of such a combination.

For instance, cationic polymerization is carried out in case of polymerizing isobutylene, while anionic polymerization is carried out in case of polymerizing a diene monomer. Therefore, it is very difficult to produce the block copolymer by using both monomers.

And also, an aromatic softening agent has been favorably compounded for raising hysteresis loss of a rubber composition.

However, a great amount of a softening agent should be compounded for obtaining high hysteresis loss, so that when using the aromatic softening agent, there is caused a problem of degrading fracture properties.

In order to solve the above problem, it is examined to use a butyl-based softening agent, but butyl rubber is poor in the compatibility with diene rubber usually used in a matrix rubber and bleeds out from a surface of a product after the shaping. Particularly, butyl rubber has a problem of degrading the adhesion property between the shaped product and another member when they are combined to obtain a final product.

It is, therefore, an object of the invention to produce block copolymers by efficiently copolymerizing two or more monomers, which have hardly been copolymerized in such a well-known method.

It is another object of the invention to provide a rubber composition capable of simultaneously establishing the fracture property and high hysteresis loss at a high level, which have never been attained in the well-known method.

The inventor has made various studies with respect to the production method of various polymers and found that various block copolymers can easily be produced by modifying a terminal of a previously polymerized homopolymer or copolymer with a reactive functional group and then modifying an active terminal of another polymer with the above modified homopolymer or copolymer, and as a result, the invention has been accomplished.

According to the invention, there is the provision of a method of producing a copolymer, which comprises polymerizing or copolymerizing a conjugated diene monomer(s) with an organolithium compound as an initiator in a hydrocarbon solvent, and then reacting an active terminal of the resulting conjugated diene polymer with a terminal-modified isobutylene based polymer.

The conjugated diene polymer is preferable to be a homopolymer of a conjugated diene monomer, or a copolymer of conjugated diene monomers, or a copolymer of a conjugated diene monomer and an aromatic monovinyl compound.

And also, the terminal-modified isobutylene based polymer is preferable to be a polyisobutylene containing an alkoxysilyl group modified with an alkoxysilane, wherein the number of the alkoxysilyl group is 1 or 2 per one molecule of the terminal-modified isobutylene based polymer.

Furthermore, the conjugated diene polymer is favorable to have a molecular weight of 1000-30000 prior to the modification with the terminal-modified isobutylene based polymer.

Moreover, the block copolymer is preferable to have a molecular weight of 2000-50000.

Further, the invention provides a rubber composition including the block copolymer as defined above.

In a preferable embodiment of the rubber composition, the block copolymer is included in an amount of 5-200 parts by weight based on 100 parts by weight of rubber ingredient.

## PREFERRED EMBODIMENTS OF THE INVENTION

The polymer according to the invention is obtained by polymerizing or copolymerizing a conjugated diene monomer(s) with an organolithium compound as an initiator in a hydrocarbon solvent, and then reacting an active terminal of the resulting conjugated diene polymer with a terminal-modified isobutylene based polymer.

As the conjugated diene monomer used in the invention, mention may be made of 1,3-butadiene, isoprene, 1,3-pentadiene, 2,3-dimethylbutadiene, 2-phenyl-1,3-butadiene, 1,3-hexadiene and the like. These compounds may be used alone or in an admixture of two or more compounds. Among them, 1,3-butadiene is preferable because it is easily available and is excellent in the living characteristic and the like in the anionic polymerization.

As the aromatic monovinyl compound used in the copolymerization with the conjugated diene monomer, mention may be made of styrene, $\alpha$-methylstyrene, 1-vinylnaphthalene, 3-vinyltoluene, ethylvinyl benzene, divinyl benzene, 4-cyclohexyl styrene, 2,4,6-trimethyl styrene and the like. Among them, styrene is preferable because it is easily available and is excellent in the living characteristic and the like in the anionic polymerization.

In case of the copolymerization of the conjugated diene monomer and the aromatic monovinyl compound, the use of 1,3-butadiene and styrene as a monomer is particularly preferable in view of practical use because each of these monomers is easily available and from a viewpoint of an excellent living characteristic, resulting in a molecular weight distribution (Mw/Mn) close to 1.

As the initiator used in the polymerization, there are mentioned a hydrocarbon compound of a lithium metal, and a complex with a polar compound thereof. Preferably, the initiator is a lithium compound having a carbon number of 2-20. For example, it includes ethyllithium, n-propyllithium, i-propyllithium, n-butyllithium, sec-butyllithium, t-butyllithium, t-octyllithium, n-decyllithium, phenyllithium, 2-naphthyllithium, 2-butyl-phenyllithium, 4-phenyl-butyllithium, cyclohexyllithium, cyclopentyllithium, tetramethylene dilithium, pentamethylene dilithium, hexamethylene dilithium, decamethylene dilithium, 1,3-dilithiobenzene, 1,4-dilithiobenzene, 1,3,5-trilithiocyclohexane, 1,2,5-trilithionaphthalene, 1,3,5,8-tetralithiodecane and the like. Among them, n-butyllithium, sec-butyllithium and t-butyllithium are favorable.

An amount of the initiator used differs in accordance with the molecular weight of the polymer to be produced, but the initiator is usually used in an amount of 0.2-50 mmol as a lithium atom per 100 g of the monomer.

In the invention, the polymerization is carried out in a solvent not deactivating the organolithium initiator such as a hydrocarbon solvent or the like. The hydrocarbon solvent is properly selected from aliphatic hydrocarbons, aromatic hydrocarbons and alicyclic hydrocarbons, each having preferably a carbon number of 3-8. Among them, propane, n-butane, i-butane, n-pentane, i-pentane, n-hexane, cyclohexane, propene, 1-butene, i-butene, trans-2-butene, cis-2-butene, 1-pentene, 2-pentene, 1-hexene, 2-hexene, benzene, toluene, xylene, ethylbenzene and the like are favorable. These solvents may be used by mixing two or more of them.

Moreover, the concentration of the monomer in the solvent is usually 5-50% by weight, preferably 10-30% by weight.

In the invention, a known randomizer may be used in the anionic polymerization of the conjugated diene monomer. The term "randomizer" used herein means a compound having a function of controlling a microstructure of the conjugated diene polymer such as increase of 1,2-bond content in a butadiene portion of butadiene polymer or butadiene-styrene polymer, increase of 3,4-bond content in isoprene polymer or the like and a function of controlling a composition distribution of each monomer unit in a copolymer of a conjugated diene monomer and an aromatic monovinyl compound such as randomization of butadiene unit and styrene unit in butadiene-styrene copolymer or the like. In the invention, any of randomizers usually used in this field may be used. For example, there are mentioned ethers and tertiary amines such as dimethoxy benzene, tetrahydrofuran, dimethoxy ethane, diethylene glycol dibutyl ether, diethylene glycol dimethyl ether, bistetrahydrofuryl propane, triethylamine, pyridine, N-methylmorpholine, N,N, N',N'-tetramethyl ethylene diamine, 1,2-dipipelidino ethane and the like. And also, a potassium salt such as potassium t-amilate, potassium t-butoxide or the like and a sodium salt such as sodium t-amilate or the like may be used.

The randomizer is used in an amount of 0.01-1000 mol equivalent per 1 mol equivalent of lithium atom in the initiator.

According to the invention, the polymerization for the conjugated diene polymer can be carried out at an arbitrary temperature within a range of about -80°C to +150°C, but a temperature of -20°C to+100°C is favorable. The polymerization reaction may be carried out under a build-up pressure. It is usually desirable to conduct the reaction under a pressure enough to substantially hold the monomer at a liquid phase. That is, although the built-up pressure is dependent upon individual substances to be polymerized, a solvent used and the polymerization temperature, a higher pressure can be used, if desired, which is obtained by a proper method such as a method of pressurizing a reactor with an inert gas for the polymerization reaction or the like.

In general, it is favorable to remove water, oxygen, carbon dioxide, other catalytic poison and the like from initiator component, solvent, monomers and all other substances concerned to polymerization step.

The molecular weight of the resulting conjugated diene polymer is not particularly limited and is properly selected in accordance with the use purpose. For example, when the conjugated diene polymer is used as a softening agent in the rubber composition, it is favorable to have a molecular weight of 1000-30000, preferably 2000-25000.

The terminal-modified isobutylene based polymer used in the invention is preferably a polymer having an isobutylene unit of not less than 90 mol% as a main chain component of a monomer composition. Such a polymer having a functional group at its molecule terminal can be synthesized by so-called initiation transfer process (see U. S. Patent No. 4,276,394). In addition to isobutylene, an unsaturated hydrocarbon capable of copolymerizing with isobutylene may be included as a repeating unit.

The terminal-modified isobutylene based polymer used in the invention is obtained by introducing a carbon-carbon unsaturated bond into the vicinity of the terminal of polyisobutylene by a method described, for example, in JP-A-63-105005, JP-A-4-288309, JP-A-4-233916 or JP-A-8-12723 and then subjecting the unsaturated bond to hydrosilylation.

As the terminal modifying group for the terminal hydrosilylated isobutylene based polymer, it is preferable to be an alkoxysilyl group represented by the following general formula (1):

$$-SiR_a(OR)_{3-a} \qquad (1)$$

wherein R is a straight or branched alkyl or allyl group having a carbon number of 1-20 or an aryl group having a carbon number of 6-20, and a is an integer of 0-2. One or two alkoxysilyl groups may be applied per one molecule of polyisobutylene.

The molecular weight of the above terminal-modified isobutylene based polymer is not particularly restricted, but may be properly selected in accordance with use purpose. For example, when it is used as an oil in a softening agent for a rubber composition, there is used a terminal-modified isobutylene based polymer having a relatively low molecular weight of not more than 20,000. Moreover, in order to sufficiently obtain an effect of using the conjugated diene polymer, the molecular weight of the terminal-modified isobutylene based polymer is favorable to be not less than 1000 but not more than 20000.

In the invention, an active terminal of a polymer obtained by anionic polymerization is modified with the above terminal-modified isobutylene based polymer.

As a reaction temperature between the terminal-modified isobutylene based polymer and the active terminal of the diene polymer, the polymerization temperature for the diene polymer may be used as it is. Preferably, the reaction temperature is within a range of 30-100°C. When it is lower than 30°C, the viscosity of the polymer tends to excessively rise, while when it exceeds 100°C, the terminal anion of the diene polymer is liable to be deactivated.

The time and method of modifying the active terminal of the diene polymer with the terminal-modified isobutylene based polymer are not particularly restricted, but the modification with such a modifying agent is generally and frequently carried out after the completion of the polymerization.

The molecular weight of the resulting block copolymer according to the invention is not particularly restricted and may be properly adjusted in accordance with the use purpose. When the block copolymer is used as a softening agent in a rubber composition, it is favorable to have a molecular weight of 2000-50000, preferably 4000-42000.

The form of the block copolymer according to the invention is not particularly restricted, but when the block copolymer is used as the softening agent in the rubber composition, it is preferably liquid in view of the operability.

The analysis of the diene polymer and the resulting block copolymer can be carried out by using GPC.

The block copolymer according to the invention can be preferably used as the softening agent in the rubber composition. In this case, the block copolymer according to the invention may be used alone or in combination with the conventionally used softening agent.

The amount of the softening agent used is not particularly restricted and may be properly adjusted in accordance with the use purpose.

In the rubber composition according to the invention, rubber ingredient is not particularly restricted, but diene rubber is preferable. As the rubber ingredient, mention may be made of natural rubber, styrene-butadiene copolymer rubber, butadiene rubber, ethylene-propylene copolymer rubber, butyl rubber, halogenated butyl rubber and the like. Particularly, when the rubber composition is used in a tire tread, natural rubber, styrene-butadiene copolymer rubber and butadiene rubber are preferable.

The rubber composition according to the invention may properly compounded with additives usually used in rubber industry.

BRIEF DESCRIPTION OF THE DRAWINGS

The invention will be described with reference to the accompanying drawings, wherein:

Figs. 1a and 1b are GPC charts of a block copolymer A before and after block formation, respectively;
Figs. 2a and 2b are GPC charts of a block copolymer B before and after block formation, respectively;
Figs. 3a and 3b are GPC charts of a block copolymer C before and after block formation, respectively;
Figs. 4a and 4b are GPC charts of a block copolymer D before and after block formation, respectively;
Figs. 5a and 5b are GPC charts of a block copolymer E before and after block formation, respectively;
Figs. 6a and 6b are GPC charts of a block copolymer F before and after block formation, respectively;
Figs. 7a and 7b are GPC charts of a block copolymer G before and after block formation, respectively;
Figs. 8a and 8b are GPC charts of a block copolymer H before and after block formation, respectively;
Figs. 9a and 9b are GPC charts of a block copolymer I before and after block formation, respectively;
Figs. 10a and 10b are GPC charts of a block copolymer J before and after block formation, respectively;
Figs. 11a and 11b are GPC charts of a block copolymer K before and after block formation, respectively;

Figs. 12a and 12b are GPC charts of a block copolymer L before and after block formation, respectively;
Figs. 13a and 13b are GPC charts of a block copolymer M before and after block formation, respectively; and
Figs. 14a and 14b are GPC charts of a block copolymer N before and after block formation, respectively.

The following examples are given in illustration of the invention and are not intended as limitations thereof.
Throughout the examples, part and % are by weight, unless otherwise stated.

(1) Various measurements are conducted as follows.

(a) Properties of polymer

The number average molecular weight (Mn) and weight average molecular weight (Mw) of the polymer are measured by a gel permeation chromatography [GPC: Model HLC-8020 made by Toso Co., Ltd., column: GMH-XL made by Toso Co., Ltd. (two column in series)] and the measured value is converted into polystyrene using a single dispersed polystyrene as a standard through a differential refractive index (RI).
The molecular weight at a peak top (Peak Top M.W.) is a molecular weight corresponding to a top of each peak in the GPC chart.
The bound styrene content in the polymer [St (weight %)] is calculated by an integration ratio of peak of proton in benzene ring to total peak through $^1$H-NMR spectrum.
The content of vinyl bond in butadiene portion (content of 1,2-bond: [Vi (%)]) is calculated from a ratio of peak of hydrogen bonded to a secondary carbon concerning with terminal double bond to sum of peak of hydrogen bonded to a tertiary carbon concerning with terminal double bond and peak of hydrogen bonded to a tertiary carbon concerning with internal double bond through $^1$H-NMR spectrum.
The efficiency of block formation [Area (%)] is determined as an area ratio of peak area of block copolymer to total peak area in the GPC chart.
The compatibility is evaluated by visually observing a transparence after 30 parts by weight of the polymer is added to 137.5 parts by weight of a high-styrene SBR (0120, trade name, made by JSR Corporation). The higher the transparence, the better the compatibility and the higher the bleeding resistance. The evaluation standard is ○: transparent, Δ: slight muddy, and X: opaque.

(b) Properties of rubber composition

The high hysteresis loss of the rubber composition is evaluated by tan δ measured at a shearing strain of 5%, a temperature of 60°C and a frequency of 15 Hz by means of a mechanical spectrometer made by Rheometric Corporation. The larger the value of tan δ, the better the high hysteresis loss.

The fracture property is measured according to a method of JIS K6301-1995.

(c) Tire performance

The gripping property is evaluated by a best lap time when four tires to be tested are mounted on a passenger car of 1500 cc and run on a test circuit course in ten laps. When a difference between a best lap time of a control tire and a best lap time of a tire containing aromatic oil increased by 10 parts by weight as compared with the control tire (shortening time: $T_1$) is 100, a difference of best lap time between test tire and control tire (shortening time: $T_2$) is measured three times and an average of the measured values is represented by an index ($T_2/T_1$). The larger the index value, the better the gripping property.

(2) Preparation of copolymer

(a) Terminal-modified isobutylene based polymer

A polyisobutylene modified at its terminal with an alkoxysilane (trade name, EPION, made by KANEKA CORPORATION) is subjected to a pretreatment to remove oil and other impurities.

(b) Diene polymer

As starting materials used for anionic polymerization, dried and purified starting materials are used unless otherwise stated.

Into a pressure glass container of 200 ml in capacity dried and purged with nitrogen gas are poured 29.44 g of cyclohexane, 2.96 g of 1,3-butadiene monomer, 0.74 g of styrene monomer and 0.259 mmol of 2,2-di(2-tetrahydrofril) propane, and 1.295 mmol of n-butyllithium (BuLi) is added thereto to conduct polymerization at 50°C for 30 minutes. The polymerization system is uniform and transparent without observing precipitates over a period from start to completion of polymerization. The degree of conversion is approximately 100%.

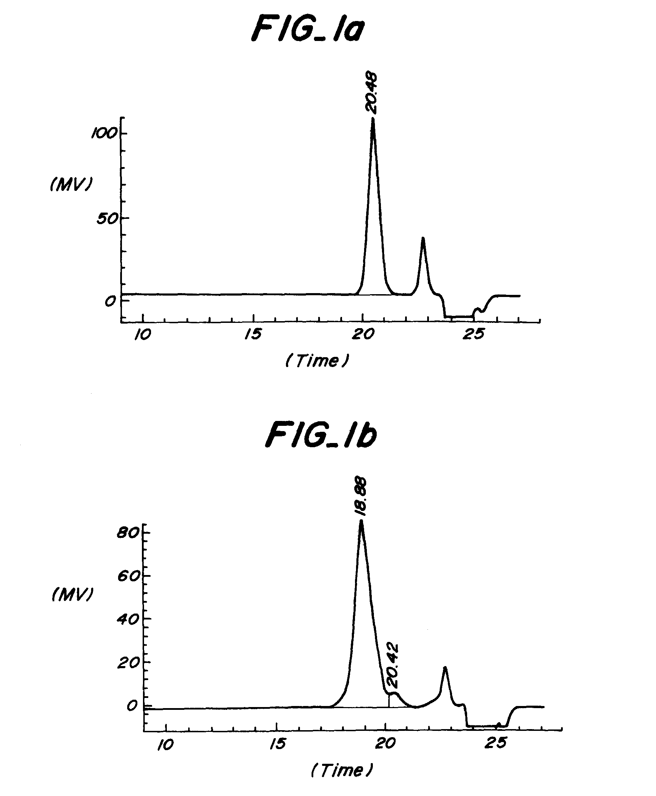

A part of the polymer solution is sampled and added with isopropyl alcohol, which is isolated and dried to obtain a copolymer. The microstructure, molecular weight and molecular weight distribution of this copolymer are measured to obtain results as shown in Table 1 and Fig. 1a.

(c) Block copolymer

To the above polymer solution are added 8.288 g of the pretreated terminal-modified polyisobutylene (EPION EP303S, made by KANEKA CORPORATION) and 19.98 g of cyclohexane to conduct reaction for the block formation for 20 minutes. Such a polymerization system is added with 0.185 ml of a solution of 7% 2,5-di-t-butylhydroquinone in isopropanol to terminate the reaction, which is further dried in the conventional manner to obtain a block copolymer A. The molecular weight, molecular weight distribution and efficiency of block formation in the block copolymer A are measured to obtain results as shown in Table 1 and Fig. 1b.

Block copolymers B-F and H-N are obtained by varying amount of n-butyllithium, mixing ratio of styrene and butadiene as a monomer, and kind and amount of terminal-modified polyisobutyrene (EPION EP303S, EPION EP103S) as shown in Table 1.

A copolymer G is obtained by adding 0.185 ml of a solution of 7% 2,5-di-t-butylhydroquinone in isopropanol after the completion of anionic polymerization to terminate the reaction without conducting the block formation and adding and mixing EPION 303S and drying in the usual manner.

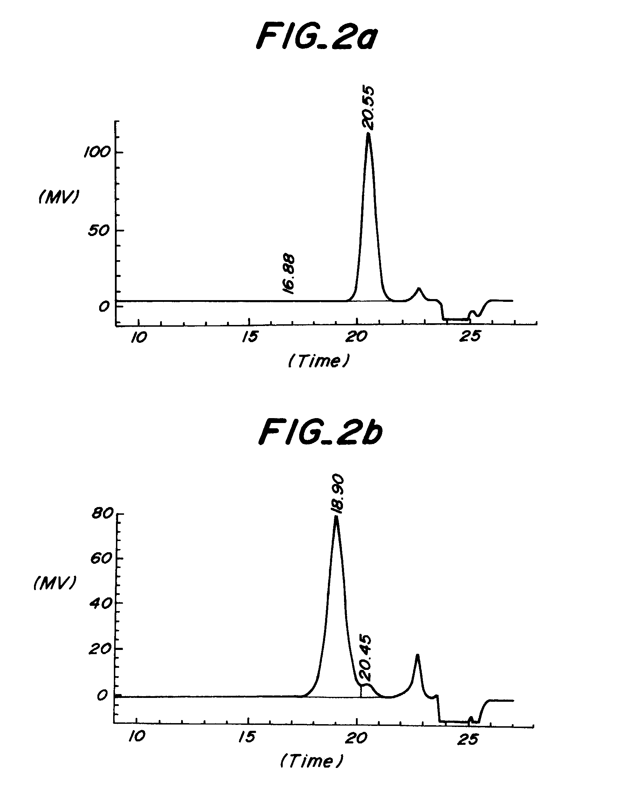

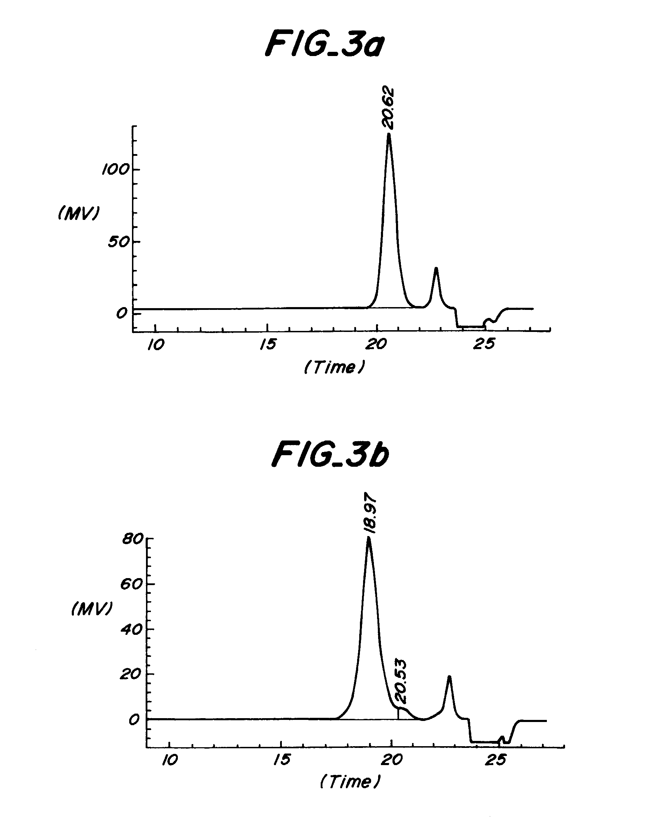

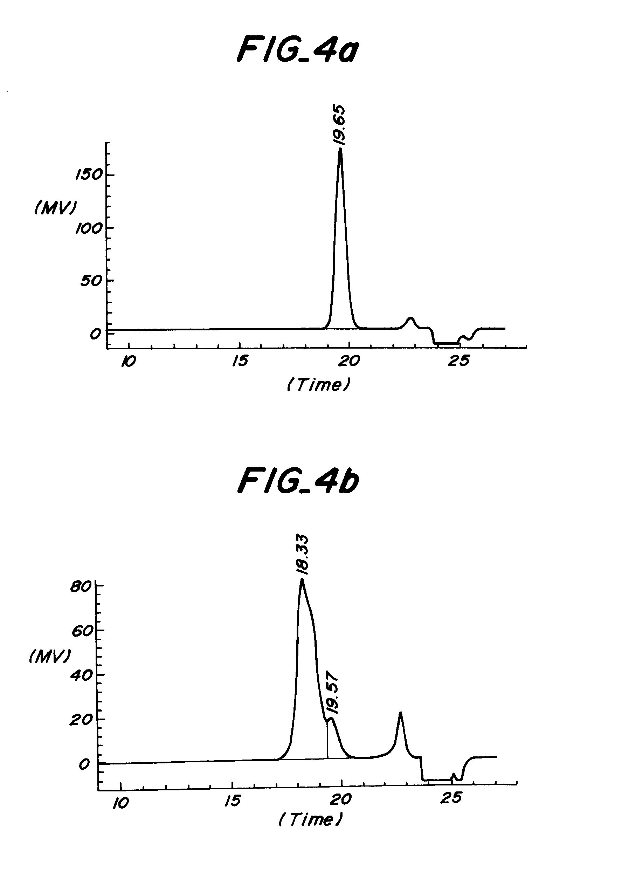

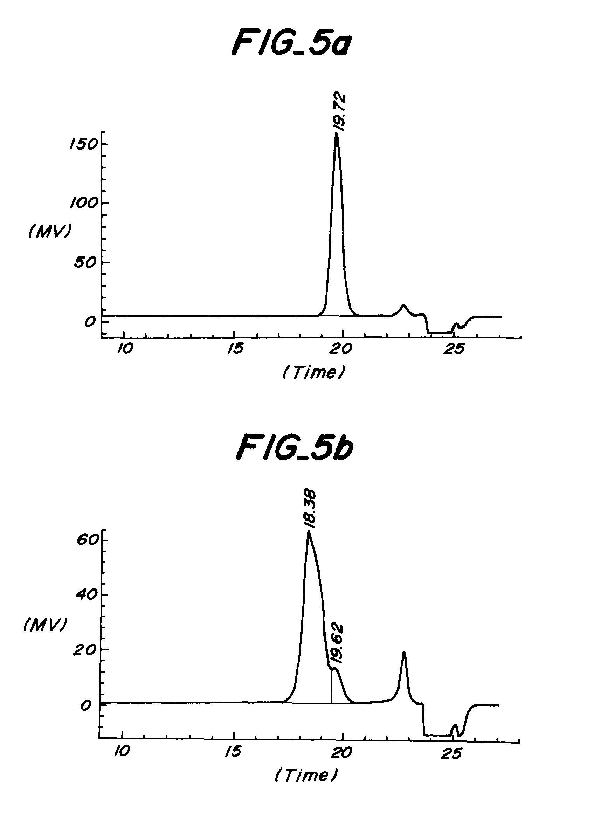

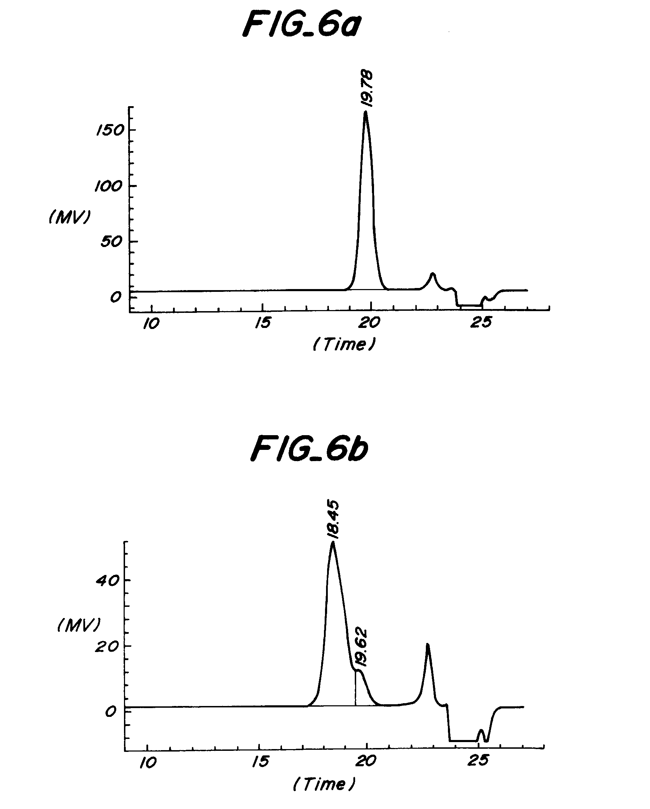

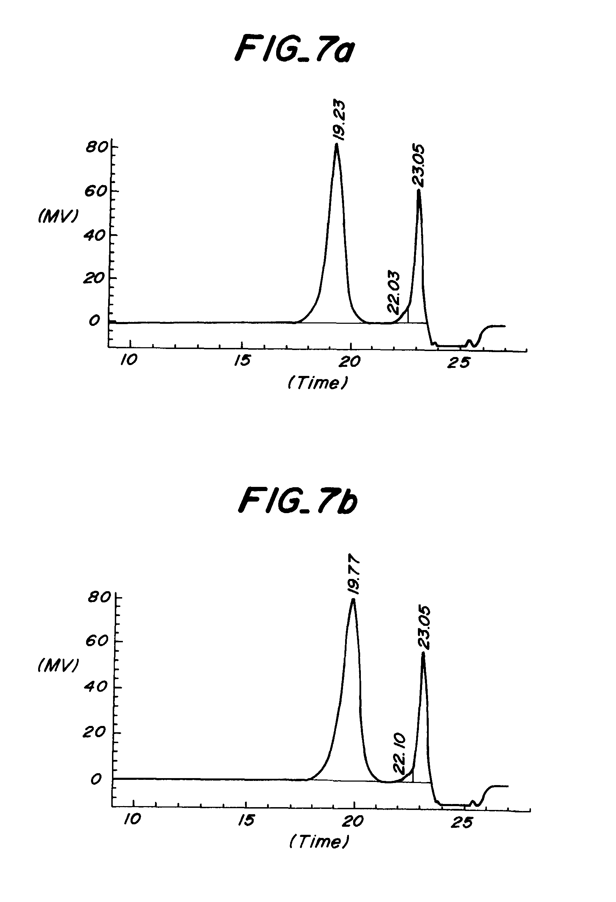

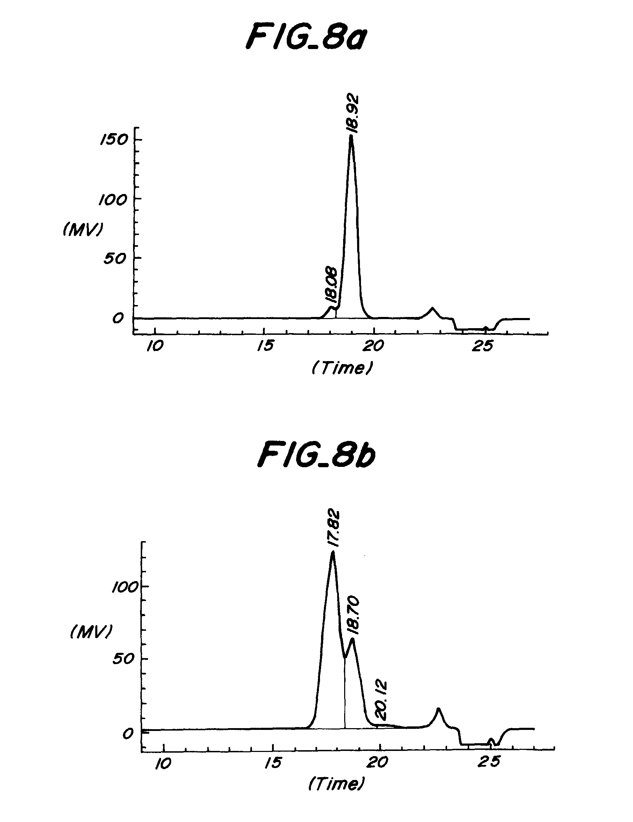

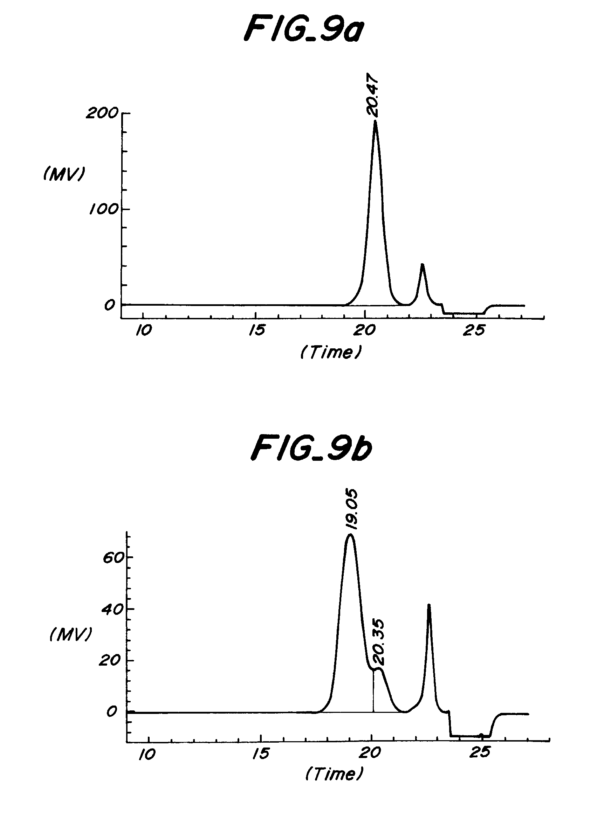

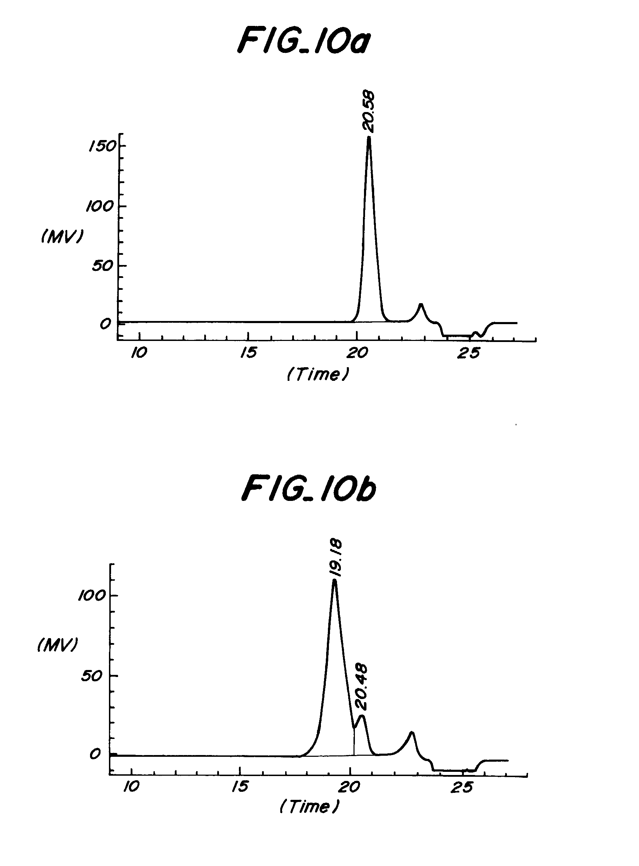

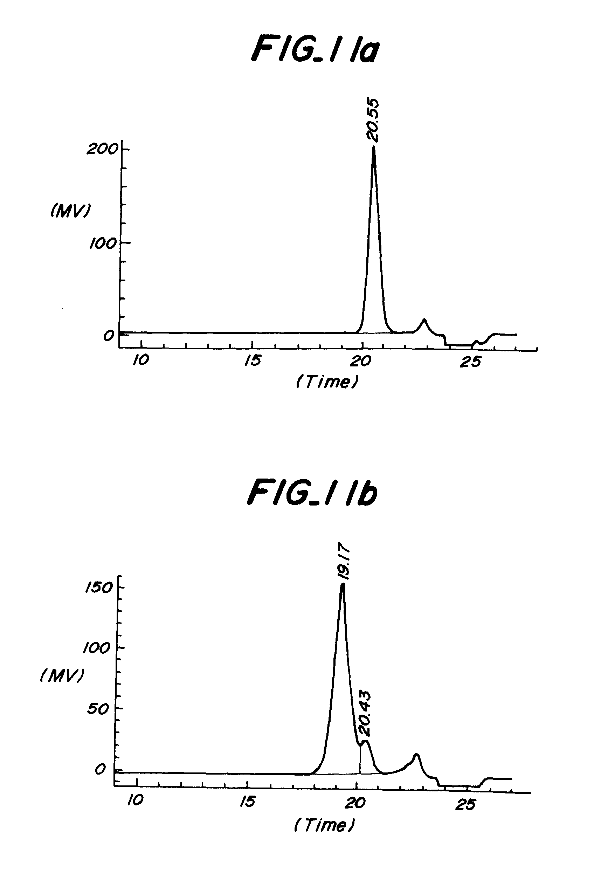

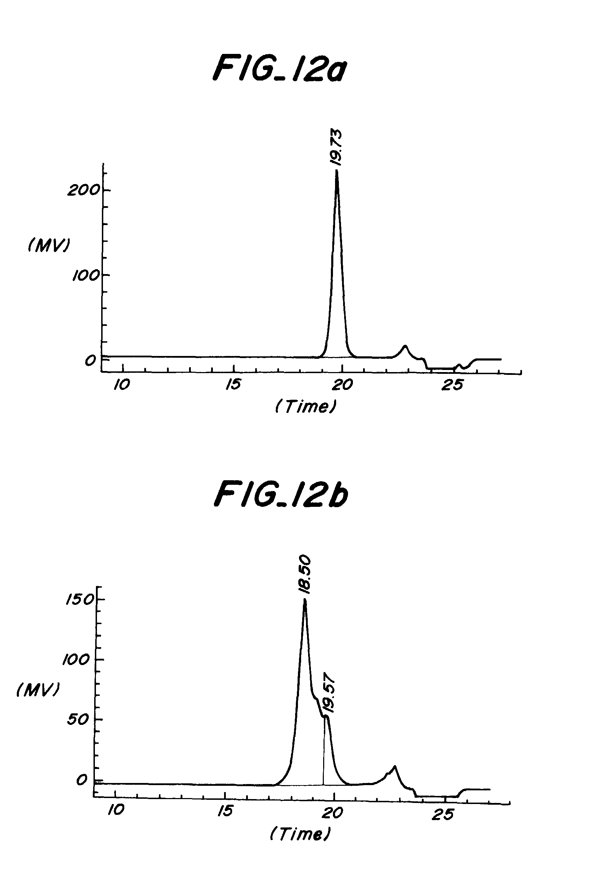

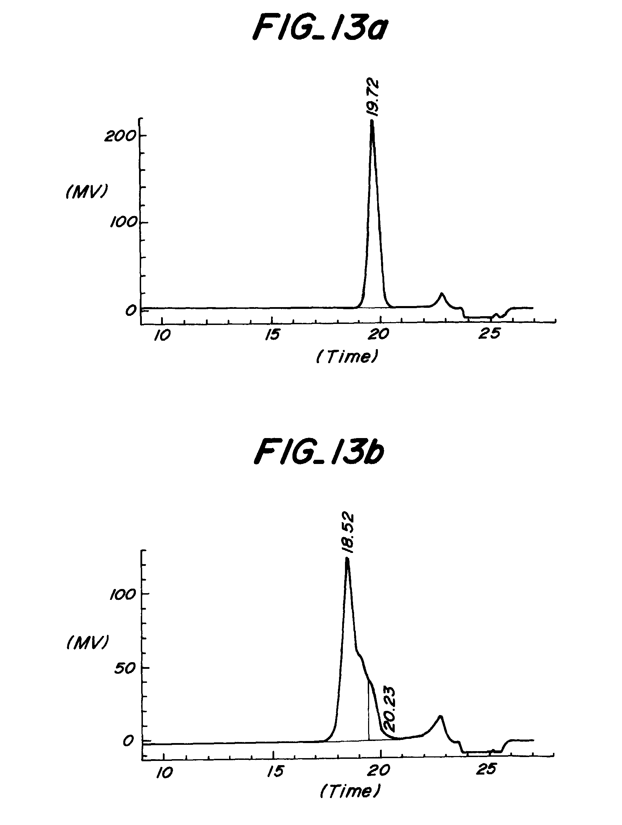

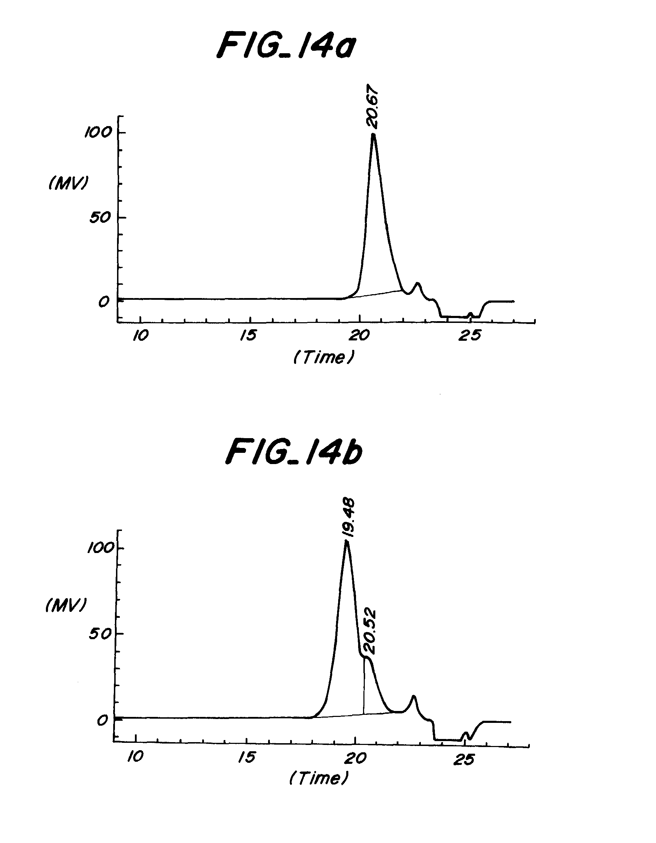

With respect to these copolymers, the microstructure, molecular weight and molecular weight distribution are measured in the same manner as in copolymer A to obtain results as shown in Table 1 and Figs. 2-14.

Table 1-1

| Block Copolymer | | | A | B | C | D | E |
|---|---|---|---|---|---|---|---|
| Amount charged (g) | | styrene | 0.74 | 1.3 | 1.85 | 1.14 | 2 |
| | | butadiene | 2.96 | 2.4 | 1.85 | 4.56 | 3.7 |
| Initiator Initiator | | kind | n-BuLi | n-BuLi | n-BuLi | n-BuLi | n-BuLi |
| | | amount (mmol) | 1.3 | 1.3 | 1.3 | 0.91 | 0.91 |
| Agent for block formation | | kind | EP303S | EP303S | EP303S | EP303S | EP303S |
| | | amount (g) | 8.3 | 8.3 | 8.3 | 6.3 | 6.3 |
| Diene polymer portion | GPC-RI | Mw | 4942 | 4751 | 4503 | 9807 | 9293 |
| | | Mw/Mn | 1.05 | 1.06 | 1.08 | 1.04 | 1.04 |
| | micro-structure | St (wt%) | 22.8 | 37.6 | 52.5 | 22 | 36.6 |
| | | Vi(%) | 62.9 | 58.9 | 56.2 | 58.7 | 56.4 |
| Isobutylene polymer portion | GPC-RI GPC-RI | Mw | 12421 | 12421 | 12421 | 12421 | 12421 |
| | | Mw/Mn | 1.15 | 1.15 | 1.15 | 1.15 | 1.15 |
| Block copolymer | GPC-RI | Peak Top M.W. | 17450 | 17205 | 16258 | 27838 | 26681 |
| | | Mw | 17259 | 17091 | 16512 | 25601 | 24586 |
| | | Mw/Mn | 1.14 | 1.13 | 1.14 | 1.11 | 1.11 |
| | efficiency of block formation | Area (%) | 95 | 96 | 96 | 89 | 89 |

Table 1-2

| Block copolymer | | | F | G | H | I |
|---|---|---|---|---|---|---|
| Amount charged (g) | | styrene | 2.85 | 0.74 | 13.5 | 5 |
| | | butadiene | 2.85 | 2.96 | 13.5 | 5 |
| Initiator | | kind | n-BuLi | n-BuLi | n-BuLi | n-BuLi |
| | | amount (mmol) | 0.91 | 1.3 | 2.2 | 3.5 |
| Agent for block formation | | kind | EP303S | EP303S | EP103S | EP103S |
| | | amount (g) | 6.3 | 8.3 | 6 | 6 |
| Diene polymer portion | GPC-RI | Mw | 8817 | 4942 | 16940 | 4690 |
| | | Mw/Mn | 1.05 | 1.05 | 1.04 | 1.09 |
| | micro-structure | St (wt%) | 51.5 | 22.8 | 50.3 | 51.3 |
| | | Vi(%) | 53.1 | 62.9 | 51 | 56.1 |
| Isobutylene polymer portion | GPC-RI | Mw | 12421 | 12421 | 7587 | 7587 |
| | | Mw/Mn | 1.15 | 1.15 | 1.18 | 1.18 |
| Block | GPC-RI | Peak Top M.W. | 25212 | - | 43117 | 14395 |
| Block copolymer | GPC-RI | Mw | 23674 | - | 48046 | 14981 |
| | | Mw/Mn | 1.11 | - | 1.08 | 1.15 |
| | efficiency of block formation | Area (%) | 89 | 0 | 70 | 87 |

Table 1-3

| Block copolymer | | | J | K | L | M | N |
|---|---|---|---|---|---|---|---|
| Amount charged (g) Amount charged (g) | | styrene | 0 | 0 | 0 | 0 | 15 |
| | | butadiene | 1 | 1 | 2 | 2 | 0 |
| Initiator | | kind | n-BuLi | n-BuLi | n-BuLi | n-BuLi | n-BuLi |
| | | amount (mmol) | 0.35 | 0.35 | 0.32 | 0.32 | 5.3 |
| Agent for block formation | | kind | EP103S | EP103S | EP103S | EP103S | EP103S |
| | | amount (g) | 1 | 1 | 1 | 1 | 15 |
| Diene polymer portion | GPC-RI | Mw | 4618 | 4752 | 9074 | 9276 | 3731 |
| | | Mw/Mn | 1.05 | 1.05 | 1.03 | 1.03 | 1.13 |
| | micro-structure | St (wt%) | 0 | 0 | 0 | 0 | 100 |
| | | Vi(%) | 63.5 | 21.6 | 61.7 | 20.7 | 0 |
| Isobutylene polymer portion | GPC-RI | Mw | 7587 | 7587 | 7587 | 7587 | 7587 |
| | | Mw/Mn | 1.18 | 1.18 | 1.18 | 1.18 | 1.18 |
| Block copolymer | GPC-RI | Peak Top M.W. | 14195 | 14396 | 25273 | 24920 | 10484 |
| | | Mw | 14188 | 14304 | 23028 | 23267 | 10968 |
| | | Mw/Mn | 1.12 | 1.11 | 1.12 | 1.1 | 1.12 |
| | efficiency of block formation | Area(%) | 87 | 90 | 83 | 83 | 81 |

As seen from Table 1, the block copolymers of the diene polymer are obtained in a high yield by using the method according to the invention irrespectively of the molecular weight and kind of the diene polymer or the polyisobutylene.

Moreover, the copolymer N is outside the scope of the invention, but is a reference example because styrene can easily be polymerized even by anionic polymerization in addition to cationic polymerization.

The compatibility with diene rubber is measured with respect to the block copolymers according to the invention to obtain results as shown in Table 2.

Table 2

| Copolymer | A | D | F | H | I | EP103S |
|---|---|---|---|---|---|---|
| Compatibility | Δ | Δ | O | O | O | × |

Then, a rubber composition is prepared by using the above block copolymer according to a compounding recipe shown in Table 3. Further, the kind of the block copolymer used and properties of the rubber composition are shown in Table 4.

Table 3

| Rubber ingredient *1 | 100 (parts by weight) |
|---|---|
| Softening agent | variable |
| Carbon black *2 | 100 |
| Stearic acid | 2 |
| Zinc oxide | 3 |
| Antioxidant *3 | 1 |
| Vulcanization accelerator *4 | 0.6 |
| Vulcanization accelerator *5 | 1.2 |
| Sulfur | 1.5 |

*1: high-styrene SBR (0102, trade name, made by JSR Corporation)

*2: carbon black N234 (Seast 7HM, trade name, made by Tokai Carbon Co., Ltd.)

*3: N-phenyl-N'-isopropyl-p-phenylene diamine

*4: 2,2'-dithiobisbenzothiazole

*5: 1,3-diphenyl guanidine

Further, each of the above rubber compositions is used in a ground contact region of a tread having a cap/base structure to prepare a tire having a tire size of 185/70R14 and then the gripping property is evaluated as a tire performance. The results are also shown in Table 4.

Table 4

| | | Comparative Example 1 | Example 1 | Example 2 | Example 3 |
|---|---|---|---|---|---|
| Softening agent | total amount | 100 | 100 | 100 | 100 |
| | amount of aromatic extender oil | 37.5 | 37.5 | 37.5 | 37.5 |
| | amount of aromatic oil | 62.5 | 22.5 | 22.5 | 22.5 |
| | amount of copolymer | - | 40 | 40 | 40 |
| | kind of copolymer | - | D | F | H |
| Fracture property | | 100 | 92 | 101 | 103 |
| High hysteresis loss | | 100 | 103 | 110 | 105 |
| Gripping property | | - | 100 | 200 | 140 |

According to the invention, block copolymers can efficiently be produced from diene monomer and isobutylene. When this block copolymer is compounded in the rubber composition instead of the conventional softening agent, the processability can be improved without exerting upon other properties, so that the block copolymers according to the invention can be used in various rubber compositions for tire, belt, rubber vibration isolator and the like. When the block copolymer according to the invention is used in a rubber composition for a tire tread, the gripping property of the tire can be improved.

**Claims**

1. A method of producing a copolymer, which comprises polymerizing or copolymerizing a conjugated diene monomer (s) with an organolithium compound as an initiator in a hydrocarbon solvent, and then reacting an active terminal of the resulting conjugated diene polymer with a terminal-modified isobutylene based polymer.

2. The method according to claim 1, wherein the conjugated diene polymer is a homopolymer of a conjugated diene monomer or a copolymer of conjugated diene monomers.

3. The method according to claim 1, wherein the conjugated diene polymer is a copolymer of a conjugated diene monomer and an aromatic monovinyl compound.

4. The method according to any one of claims 1 to 3, wherein the terminal-modified isobutylene based polymer is a polyisobutylene containing an alkoxysilyl group modified with an alkoxysilane.

5. The method according to claim 4, wherein the number of the alkoxysilyl group is 1 or 2 per one molecule of the isobutylene based polymer.

6. The method according to any one of claims 1 to 5, wherein the conjugated diene polymer has a molecular weight of 1000-30000 prior to the modification.

7. The method according to any one of claims 1 to 6, wherein the block copolymer has a molecular weight of 2000-50000.

8. A block copolymer polymerized by any one of the methods claimed in claims 1 to 7.

9. A rubber composition comprising a rubber ingredient and a block copolymer as claimed in claim 8.

10. A rubber composition according to claim 9, wherein the block copolymer is compounded in an amount of 5-200 parts by weight based on 100 parts by weight of the rubber ingredient.

# FIG_Ia

# FIG_Ib

# FIG. 2a

# FIG. 2b

## FIG_3a

## FIG_3b

# FIG_4a

# FIG_4b

## FIG_5a

## FIG_5b

## FIG_6a

## FIG_6b

## FIG_7a

## FIG_7b

## FIG_8a

## FIG_8b

# FIG. 9a

# FIG. 9b

# FIG_10a

# FIG_10b

# FIG_II a

# FIG_II b

## FIG.12a

## FIG.12b

## FIG_13a

## FIG_13b

## FIG_14a

## FIG_14b

**European Patent Office**

## EUROPEAN SEARCH REPORT

Application Number

EP 99 30 3940

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | DATABASE WPI<br>Section Ch, Week 9923<br>Derwent Publications Ltd., London, GB;<br>Class A12, AN 99-267153<br>XP002114313<br>& JP 11 080364 A (YOKOHAMA RUBBER CO LTD),<br>26 March 1999 (1999-03-26)<br>* abstract * | 1,2,4,5,<br>9 | C08G81/02<br>C08F297/04 |
| X | US 5 260 383 A (OSMAN AKHTAR)<br>9 November 1993 (1993-11-09)<br>* claim 1 * | 1-3,6-10 | |
| A | US 4 379 891 A (HAYNES GEORGE R)<br>12 April 1983 (1983-04-12)<br>* claim 1 * | 1,4 | |
| A | US 5 741 859 A (SAXENA ANIL KUMAR ET AL)<br>21 April 1998 (1998-04-21)<br>* claim 1 * | 1,4 | |
| | | | TECHNICAL FIELDS SEARCHED (Int.Cl.6)<br><br>C08G<br>C08F |

The present search report has been drawn up for all claims

| Place of search | Date of completion of the search | Examiner |
|---|---|---|
| THE HAGUE | 3 September 1999 | Meulemans, R |

EPO FORM 1503 03.82 (P04C01)

# EP 0 959 096 A1

**ANNEX TO THE EUROPEAN SEARCH REPORT
ON EUROPEAN PATENT APPLICATION NO.** EP 99 30 3940

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-1999

| Patent document cited in search report | | Publication date | Patent family member(s) | | | Publication date |
|---|---|---|---|---|---|---|
| JP 11080364 | A | 26-03-1999 | NONE | | | |
| US 5260383 | A | 09-11-1993 | CA | 2064938 | A | 18-10-1992 |
| | | | DE | 69211215 | D | 11-07-1996 |
| | | | DE | 69211215 | T | 10-10-1996 |
| | | | EP | 0509357 | A | 21-10-1992 |
| | | | JP | 7216037 | A | 15-08-1995 |
| | | | US | 5362817 | A | 08-11-1994 |
| US 4379891 | A | 12-04-1983 | AU | 548219 | B | 28-11-1985 |
| | | | AU | 8484882 | A | 23-12-1982 |
| | | | CA | 1185393 | A | 09-04-1985 |
| | | | EP | 0067468 | A | 22-12-1982 |
| | | | JP | 1626150 | C | 28-11-1991 |
| | | | JP | 2043761 | B | 01-10-1990 |
| | | | JP | 57212205 | A | 27-12-1982 |
| | | | ZA | 8204164 | A | 27-04-1983 |
| US 5741859 | A | 21-04-1998 | EP | 0856540 | A | 05-08-1998 |
| | | | JP | 10259251 | A | 29-09-1998 |

EPO FORM P0459

For more details about this annex : see Official Journal of the European Patent Office, No. 12/82

25